# FASCICULE DE BREVET EUROPEEN

(11) **EP 2 634 780 B1**
(45) Date de publication et mention de la délivrance du brevet: **26.07.2017**
(21) Numéro de dépôt: 13305028.6
(22) Date de dépôt: 14.01.2013
(51) Int. Cl.: H01F 7/08, H01F 38/14, B60L 11/18

(54) **Dispositif d'actionnement à commande électromagnétique et dispositif de rechargement**
Betätigungsvorrichtung mit elektromagnetischer Steuerungen und Aufladevorrichtung
Actuating device with electromagnetic control and recharging device

(30) Priorité: 02.03.2012 FR 1200632
(43) Date de publication de la demande: 04.09.2013
(73) Titulaire: Schneider Electric Industries SAS, 92500 Rueil-Malmaison (FR)
(72) Inventeur: Blondel, Charles, 38050 GRENOBLE Cedex 09 (FR); Ortolan, Perrine, 38050 GRENOBLE Cedex 09 (FR)
(74) Mandataire: Tripodi, Paul

(56) Documents cités:
- EP-A2- 0 878 811
- US-A1- 2009 286 414

## Description

L'invention est relative à un dispositif d'actionnement à commande électromagnétique comportant un circuit magnétique composé d'une première et d'une deuxième partie et d'une bobine de commande alimentée pour générer un flux magnétique de commande et actionner en mouvement la deuxième partie entre une position d'ouverture et une position de fermeture du circuit magnétique.

L'invention concerne un dispositif de rechargement de véhicule électrique comportant des bornes passive et active de chargement.

### ETAT DE LA TECHNIQUE

L'utilisation de serrure électromagnétique est connue notamment dans le domaine des prises électriques utilisée pour le chargement de véhicule électrique.

Il peut en effet être utile de verrouiller de manière automatique l'accès à une borne de chargement lors d'une période de non utilisation.

En outre, il peut en effet être utile de verrouiller de manière automatique l'accès à la prise électrique embarqué sur le véhicule pendant une période de non utilisation.

Enfin, des serrures électromagnétiques sont aussi utilisées pour verrouiller une prise électrique du véhicule sur la prise de la borne de chargement pendant un chargement.

Les mécanismes de verrouillage existants présentent l'inconvénient d'utiliser des dispositifs autonomes de commande de verrouillage à la fois sur le véhicule et sur la borne de chargement. Chacun de ces dispositifs autonomes nécessite alors une architecture complète comprenant notamment un circuit magnétique, une bobine associée à un circuit de commande, organe de décision....

L'utilisation de moyens mécaniques de verrouillage présente généralement des pièces apparentes pouvant être déverrouillées avec un outil.

L'utilisation de moyens électroniques de verrouillage implique d'avoir à la fois de l'intelligence sur le véhicule et sur la borne de chargement. L'utilisation de moyens électroniques implique aussi une double alimentation.

En outre, lorsque une séquence de verrouillage est utilisée pour verrouiller/déverrouiller les dispositifs autonomes de commande de verrouillage du véhicule et de la borne, il faut alors prévoir des moyens de détection. Par exemple, lesdits moyens doivent être aptes à vérifier que le véhicule est bien relié à la borne avant d'autoriser une mise sous tension des bornes de connexion de la borne de chargement. Un défaut de fonctionnement et/ou de synchronisation des moyens de détection présents dans la borne et dans le véhicule pourrait entrainer un accès aux moyens de connexion électriques sous tension de la borne alors qu'aucun véhicule n'est connecté. Chacun des documents US2009/286414 et EP0878811 décrit un dispositif d'actionnement à commande électromagnétique selon la préambule de la revendication 1.

### EXPOSE DE L'INVENTION

L'invention vise donc à remédier aux inconvénients de l'état de la technique, de manière à proposer un dispositif d'actionnement à commande électromagnétique comportant des moyens de verrouillage sécurisés selon la revendication 1. La première partie du circuit magnétique du dispositif d'actionnement à commande électromagnétique comporte une première et une seconde culasses déplaçables l'une part rapport à l'autre entre une position initiale et une position finale autorisant la circulation du flux magnétique de commande. En outre, la deuxième partie du circuit magnétique comporte une première gâchette magnétique mobile actionnable en déplacement par rapport à la première culasse entre la position d'ouverture et la position de fermeture du circuit magnétique lorsque les deux culasses sont dans la position finale.

Selon un mode de réalisation de l'invention, la deuxième partie du circuit magnétique comporte une seconde gâchette magnétique mobile actionnée en déplacement par rapport à la seconde culasse entre la position d'ouverture et la position de fermeture du circuit magnétique lorsque les deux culasses sont dans la position finale.

La bobine de commande est apte à générer un flux magnétique de commande dans le circuit magnétique pour déplacer au moins une gâchette magnétique mobile entre la position d'ouverture et la position de fermeture du circuit magnétique.

Selon les modes de réalisation de l'invention, la première et la seconde culasses sont destinées à collaborer directement ou indirectement l'une avec l'autre pour placer la première partie du circuit magnétique dans la position finale.

Selon un premier mode particulier, la première culasse comporte la bobine de commande, la première culasse étant apte à collaborer directement avec la seconde culasse pour placer la première partie du circuit magnétique dans la position finale.

Selon un second mode particulier, le circuit magnétique comporte une pièce d'accouplement magnétique s'interposant entre la première culasse collaborant indirectement avec la seconde culasse pour placer la première partie du circuit magnétique dans la position finale.

Avantageusement la pièce d'accouplement magnétique comporte la bobine de commande.

Selon un mode de réalisation de l'invention, la deuxième partie du circuit magnétique comporte des premiers moyens de retenu de la première gâchette mobile dans la position d'ouverture, lesdits premiers moyens s'opposant à une action du flux magnétique de commande de la bobine de commande.

De préférence, les moyens de retenu génèrent une force de retenu d'intensité inférieure à une force magnétique générée par la bobine de commande, ladite force étant directement proportionnelle à une force élastique générée par un premier moyen élastique de rappel de la première gâchette magnétique mobile dans la première position d'ouverture et à un premier entrefer séparant la première gâchette magnétique mobile de la première culasse dans la position d'ouverture.

Selon un mode de réalisation de l'invention, la deuxième partie du circuit magnétique comporte des seconds moyens de retenu de la seconde gâchette mobile dans la position d'ouverture, lesdits seconds moyens s'opposant à une action du flux magnétique de commande de la bobine de commande en générant une seconde force de retenu d'intensité inférieure à une force magnétique générée par la bobine de commande. Ladite seconde force est directement proportionnelle à une force élastique générée par un second moyen élastique de rappel de la seconde gâchette magnétique mobile dans la première position d'ouverture et à un second entrefer séparant la seconde gâchette magnétique mobile de la seconde culasse dans la position d'ouverture.

Avantageusement, la seconde force d'ouverture des seconds moyens de retenu de la seconde gâchette magnétique mobile est d'intensité supérieure à la première force d'ouverture des premiers moyens de retenu de la première gâchette magnétique mobile.

De préférence, chaque culasse comporte deux branches reliées par une gâchette magnétique mobile dans la position de fermeture du circuit magnétique.

Avantageusement, chaque gâchette est reliée à une trappe mobile d'accès à des moyens de connexion électrique, le déplacement de la gâchette entrainant le déplacement de la trappe d'accès.

De préférence, le dispositif d'actionnement comporte des moyens de détection de la position finale des culasses, lesdits moyens de détection étant reliés aux moyens de commande de la bobine de commande pour l'alimenter lorsque les deux culasses sont dans la position finale.

Les premiers moyens de connexion électrique de la borne passive de chargement pour véhicule électrique sont disposés dans un volume fermé par une première trappe mobile d'accès verrouillée par un dispositif d'actionnement tel que défini ci-dessus.

Les seconds moyens de connexion électrique de la borne active de chargement pour véhicule électrique sont disposés dans un volume fermé par une seconde trappe mobile d'accès verrouillé par un dispositif d'actionnement tel que défini ci-dessus.

De préférence, la borne active de chargement comporte des moyens de détection de la position finale des première et seconde culasses.

La borne passive du dispositif de rechargement de véhicule électrique est intégrée dans un véhicule électrique et la borne active dudit dispositif est intégrée dans un robot mobile relié à une source électrique. Ledit robot est destiné à venir en contact avec la borne passive de manière à ce que la seconde culasse et la première culasse soient dans la position finale.

### BREVE DESCRIPTION DES FIGURES

D'autres avantages et caractéristiques préferes ressortiront plus clairement de la description qui va suivre d'un mode particulier de réalisation de l'invention, donné à titre d'exemple non limitatif, et représenté aux dessins annexés sur lesquels :
La figure 1 représente une vue d'ensemble en perspective d'un dispositif d'actionnement à commande électromagnétique dans une position initiale d'ouverture selon un mode de réalisation de l'invention ;
Les figures 2 à 4 représentent le dispositif d'actionnement à commande électromagnétique selon la figure 1 dans différentes positions de fonctionnent ;
Les figures 5A et 5B montrent respectivement des vues en perspective d'une borne active et d'une borne passive de chargement d'un dispositif de rechargement selon l'invention ;
Les figures 6 et 7 montrent des vues d'un dispositif de chargement selon l'invention, dispositif comprenant des bornes active et mobile de chargement dans différentes positions de fonctionnement ;
La figure 8 montre une vue de détail en perspective d'une borne passive de chargement d'un dispositif de rechargement selon l'invention.

### DESCRIPTION DETAILLEE D'UN MODE DE REALISATION

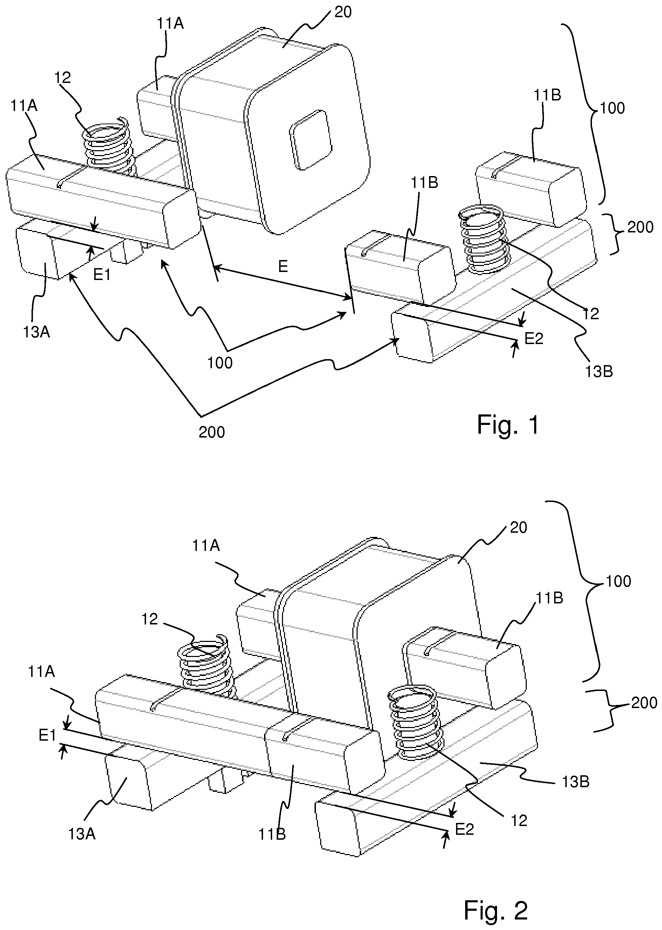

Selon un mode de réalisation de l'invention tel que représenté sur les figures 1 et 2, le dispositif d'actionnement à commande électromagnétique comporte un circuit magnétique composé d'une première 100 et d'une deuxième partie 200.

Le dispositif d'actionnement comporte en outre une bobine de commande 20 alimentée pour générer un flux magnétique de commande dans le circuit magnétique. Le flux magnétique est apte à actionner en mouvement la deuxième partie 200 par rapport à la première partie 100, mouvement entre une position d'ouverture et une position de fermeture du circuit magnétique.

La première partie 100 du circuit magnétique comporte une première et une seconde culasse 11 A, 11 B déplaçables l'une part rapport à l'autre entre une position initiale et une position finale. Lorsque les deux culasses sont dans la position finale telle que représentée sur la figure 2, le flux magnétique de commande peut alors circuler dans le circuit magnétique. L'entrefer principal E présent entre les deux culasses placées dans une position initiale (figure 1) interdit le passage d'un flux magnétique à travers les deux culasses 11 A, 11 B.

La première et la seconde culasses 11 A, 11 B sont destinées à collaborer directement ou indirectement l'une avec l'autre pour positionner la première partie 100 du circuit magnétique dans la position finale. Les première et seconde culasses 11 A, 11B collaborent directement ou indirectement pour réduire l'entrefer principal E et autoriser la circulation d'un flux magnétique dans le circuit magnétique.

La deuxième partie 200 du circuit magnétique comporte une première gâchette 13A magnétique mobile actionnable en déplacement par rapport à la première culasse 11 A entre la position d'ouverture et la position de fermeture du circuit magnétique.

Le déplacement de la première gâchette 13A de la position d'ouverture vers la position de fermeture du circuit magnétique ne peut se faire que lorsque les deux culasses 11 A, 11 B sont dans la position finale.

Dans la position d'ouverture, la première gâchette mobile 13A est séparée de la première culasse 11 A par un premier entrefer E1.

Selon un mode préférentiel de réalisation de l'invention tel que représenté sur les figures 1 et 2, la deuxième partie 200 du circuit magnétique comporte une seconde gâchette 13B magnétique mobile actionnable en déplacement par rapport à la seconde culasse 11 B entre la position d'ouverture et la position de fermeture du circuit magnétique.

Le déplacement de la seconde gâchette 13B de la position d'ouverture vers la position de fermeture du circuit magnétique ne peut se faire que lorsque les deux culasses 11 A, 11 B sont dans la position finale.

Dans la position d'ouverture, la seconde gâchette mobile 13B est séparée de la première culasse 11 B par un second entrefer E2.

Selon un mode réalisation de l'invention, chaque culasse 11 A, 11 B comporte deux branches reliées par une gâchette 13A, 13B magnétique mobile dans la position de fermeture du circuit magnétique. Des premières extrémités des deux branches de la première culasse 11 A sont positionnée en vis-à-vis des premières extrémités des deux branches de la seconde culasse 11 B placée dans la position finale. De préférence, les extrémités des branches de la première culasse 11 A sont en contact avec les extrémités des branches de la seconde culasse 11 B. Les branches de chaque culasse sont de préférence disposées de manière parallèle. Les gâchettes sont disposées sensiblement de manière perpendiculaire aux branches des culasses 11 A, 11 B. En outre, les gâchettes sont de préférence positionnées au niveau des secondes extrémités des branches des culasses 11 A, 11 B.

La bobine de commande 20 est apte à générer un flux magnétique de commande dans le circuit magnétique pour déplacer au moins une gâchette 13A, 13B magnétique mobile entre la position d'ouverture et la position de fermeture du circuit magnétique. La bobine est alimentée par une unité de commande non représentée. De préférence, ladite bobine est alimentée lorsque les deux culasses 11 A, 11 B sont dans la position finale.

Suivant un mode particulier de réalisation de l'invention tel que représenté sur les figures 1 et 2, la première culasse 11 A comporte la bobine de commande 20. La bobine de commande est positionnée autour d'une des deux branches parallèles de la première culasse 11 A. La première culasse 11 A est alors apte à collaborer directement avec la seconde culasse 11 B pour placer le circuit magnétique dans la position finale. Les première extrémités des deux branches de la première culasse 11 A sont alors positionnée en vis-à-vis des premières extrémités des deux branches de la seconde culasse 11 B. L'entrefer principal E est alors réduit au maximum.

Le fonctionnement du dispositif d'actionnement est le suivant. Lorsque les deux culasses sont dans la position finale, c'est-à-dire lorsque les premières extrémités des branches de la première culasse 11 A sont en contact avec les premières extrémités des branches de la seconde culasse 11 B, la bobine de commande est alors alimentée par l'unité de commande. Le flux magnétique généré par la bobine de commande circule dans le circuit magnétique à travers les branches des premières et secondes culasses 11 A, 11 B, et à travers le premier et le second entrefer E1, E2. L'entrefer principal E réduit au maximum est alors négligeable. Le flux magnétique crée deux forces F1, F2 de déplacement s'appliquant sur les gâchettes 13A, 13B. Les forces de déplacement sont destinées à attirer lesdites gâchettes vers les secondes extrémités des branches des culasses 11 A, 11 B. Autrement dit, les force de déplacements F1, F2 tendent à déplacer les gâchettes de la position d'ouverture vers la position de fermeture.

Le dispositif d'actionnement comporte des moyens de détection de la position finale des culasses 11 A, 11 B. Lesdits moyens de détection sont reliés à l'unité de commande de la bobine de commande 20 pour l'alimenter lorsque les deux culasses 11 A, 11 B sont dans la position finale.

A titre d'exemple de réalisation, les moyens de détection comportent un capteur d'inductance du circuit magnétique. Le capteur d'inductance mesure l'inductance du circuit magnétique en mesurant des variations de courant circulant dans ledit circuit. A titre d'exemple, une tension variable de type sinusoïdale assez faible est appliquée, et la variation du courant est ensuite mesurée. Plus l'amplitude du courant mesuré sera petite, plus l'inductance sera grande. On peut alors détecter si on est en position initiale ou finale, et même voir si les gâchettes sont actionnées ou non. En termes de réalisation, une alimentation continue peut être utilisée pour la commande des gâchettes. A ce signal continu, sera superposé le signal sinusoïdal de mesure, des filtres passe-haut enlevant ensuite la composante continue pour observer uniquement le signal du courant de mesure.

Selon un premier mode particulier de fonctionnement, les deux entrefers E1, E2 sont de taille identique. Si la section du circuit magnétique est sensiblement constante sur toute la longueur dudit circuit, les forces de déplacements F1, F2 s'appliquant respectivement sur les gâchettes 13A, 13B sont alors de même intensité. Les déplacements des gâchettes 13A, 13B de la position d'ouverture vers la position de fermeture se fait de manière simultanée.

Selon un seconde mode particulier de fonctionnement, les deux entrefers E1, E2 sont de taille différente. Si la section du circuit magnétique est sensiblement constante sur toute la longueur dudit circuit, les forces de déplacements F1, F2 s'appliquant respectivement sur les gâchettes 13A, 13B sont alors d'intensité différente. Les déplacements des gâchettes 13A, 13B de la position d'ouverture vers la position de fermeture se fait de manière décalée. La gâchette qui se trouve la moins éloignée de la culasse dans la position d'ouverture a tendance à se déplacer en première.

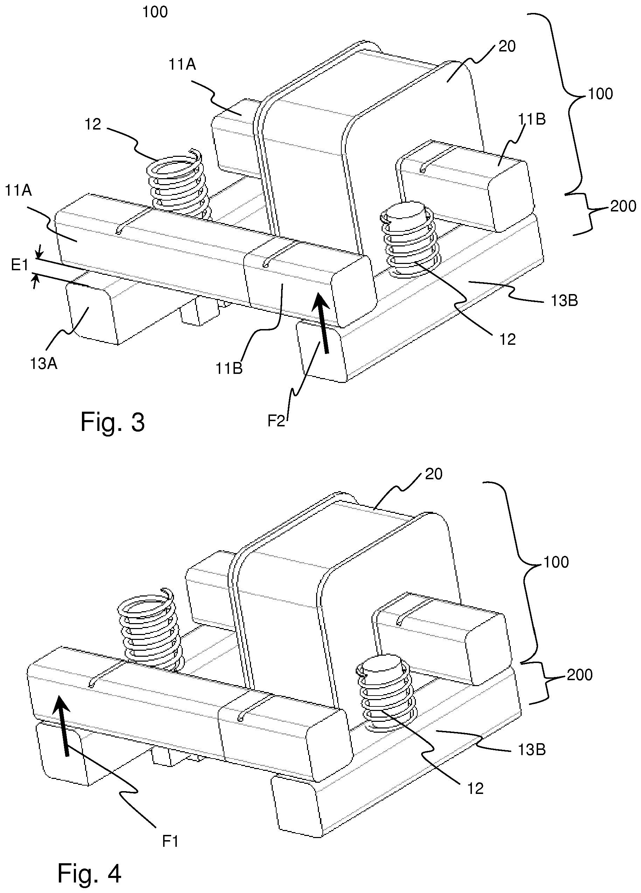

Selon un mode de développement de l'invention tel que représenté sur les figures 1 à 4, la deuxième partie du circuit magnétique 200 comporte des premiers moyens de retenu de la première gâchette 13A mobile dans la position d'ouverture. Les premiers moyens de retenu s'opposent à une action du flux magnétique de commande de la bobine de commande 20, action dudit flux sur ladite gâchette 13A. A titre d'exemple, les premiers moyens de retenu comportent un premier moyen élastique de rappel 12 qui tend à retenir la première gâchette 13A magnétique mobile dans une position d'ouverture. Ainsi, selon ce mode de développement de l'invention, les premiers moyens de retenu génèrent une force de retenu FR1 d'intensité inférieure à une force magnétique de déplacement F1 générée par la bobine de commande. Ladite force de retenue est alors directement proportionnelle à :
- une force élastique générée par le premier moyen élastique de rappel 12 de la première gâchette 13A ;
- un premier entrefer E1 séparant la première gâchette magnétique 13A mobile de la première culasse 11 A dans la position d'ouverture.

Selon ce mode de développement de l'invention, la deuxième partie 200 du circuit magnétique comporte des seconds moyens de retenu de la seconde gâchette 13B mobile dans la position d'ouverture. Les seconds moyens s'opposent à une action du flux magnétique de commande de la bobine de commande 20. A titre d'exemple, les seconds moyens de retenu comportent un second moyen élastique de rappel 12 qui tend à retenir la seconde gâchette 13B magnétique mobile dans une position d'ouverture. Ainsi, selon ce mode de développement de l'invention, les seconds moyens de retenu génèrent une force de retenu FR2 d'intensité inférieure à une force magnétique de déplacement F2 générée par la bobine de commande 20. Ladite force de retenue est alors directement proportionnelle à :
- une force élastique générée par le second moyen élastique de rappel 12 de la seconde gâchette 13B ;
- un second entrefer E2 séparant la seconde gâchette magnétique 13B mobile de la seconde culasse 11 B dans la position d'ouverture.

Ainsi, en combinant les différents modes de réalisation de l'invention, c'est à dire en choisissant les tailles de entrefer E1, E2 ainsi que le dimensionnement des premiers et seconds moyens élastique 12, il est possible de régler la vitesse de fermeture des gâchettes 13A, 13B ainsi que la synchronisation de fermeture entre les première et seconde gâchettes 13A, 13B.

A titre d'exemple de réalisation, la seconde force de retenue FR2 des seconds moyens de retenu de la seconde gâchette 13B magnétique mobile est d'intensité inférieure à la première force de retenue FR1 des premiers moyens de retenu de la première gâchette magnétique mobile 13A.

Suivant une variante de réalisation de l'invention non représentée, le circuit magnétique comporte une pièce d'accouplement magnétique. Ladite pièce s'interpose entre la première culasse 11 A qui collabore indirectement avec la seconde culasse 11 B en pour fermer le circuit magnétique dans la position finale. Selon ce mode de réalisation, la pièce d'accouplement magnétique comporte la bobine de commande. Autrement dit, la pièce d'accouplement joue le rôle d'une pièce intermédiaire sur laquelle est montée la bobine de commande 20. Les deux culasse 11 A, 11 B viennent se connecter de part et d'autre de cette pièce intermédiaire pour placer le circuit magnétique dans la position finale.

Le dispositif d'actionnement selon l'invention est particulièrement destiné à actionner des moyens de verrouillage. Ainsi, selon un mode de développement, chaque gâchette 13A, 13B est reliée à une trappe mobile 21 d'accès à des moyens de connexion électrique. Le déplacement de la gâchette entraine le déverrouillage de la trappe d'accès.

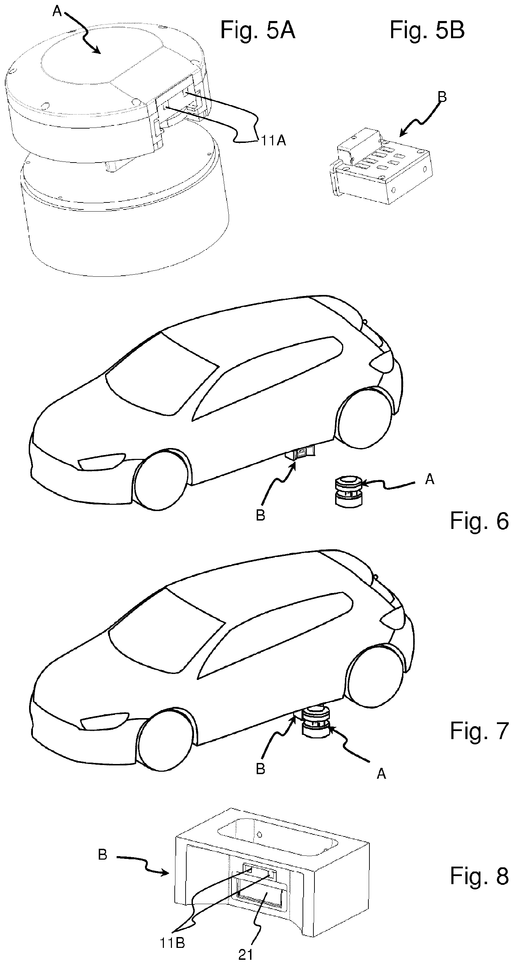

Comme représentée sur la figure 5B, l'invention est relative à une borne passive de chargement B pour véhicule électrique comportant des premiers moyens de connexion électrique destinés à être connectés à des seconds moyens de connexion d'une borne active de chargement A. Comme représenté sur la figure 8, les premiers moyens de connexion électrique sont disposés dans un volume fermé par une trappe mobile d'accès 21 d'accès actionnée par un dispositif d'actionnement selon l'invention. La trappe mobile d'accès 21 est reliée à la seconde gâchette mobile 13B.

Comme représentée sur la figure 5A, l'invention est relative à une borne active de chargement A pour véhicule électrique comportant des seconds moyens de connexion électrique destinés à être connectés à des premiers moyens de connexion d'une borne passive de chargement B. Les seconds moyens de connexion électrique sont disposés dans un volume fermé par une trappe mobile d'accès actionnée par un dispositif d'actionnement selon l'invention. La trappe mobile d'accès est reliée à la première gâchette mobile 13A. De préférence, la borne active de chargement B comporte les moyens de détection de la position finale de la première et seconde culasse 11 A, 11 B.

L'invention est relative à un dispositif de chargement de véhicule électrique comportant une borne passive de chargement B et une borne mobile de chargement A. Comme représenté sur les figures 6 et 7, la borne passive de chargement B est intégrée dans un véhicule électrique et la borne active de chargement A est intégrée dans un robot mobile relié à une source électrique.

Le fonctionnement du dispositif de rechargement de véhicule électrique est le suivant. Le robot mobile intégrant une borne active de chargement A est destiné à venir en contact avec une borne passive de chargement B du véhicule électrique. Le guidage du robot mobile vers la borne passive de chargement peut être fait par différents moyens tels que des moyens de guidage par infrarouge. La cible émet un signal de guidage dans une direction. Le robot recherche ce signal. Lorsqu'il le perd, il se retourne et recherche le signal. Le signal a une forme de cône, et l'objectif du robot est de se diriger vers la pointe du cône, d'où provient le signal de guidage.

Le robot est ainsi guidé pour se positionner à coté du véhicule électrique. Lorsque les deux culasses 11 A, 11 B sont dans la position finale, c'est-à-dire lorsque les premières extrémités des branches de la première culasse 11 A sont en contact avec les premières extrémités des branches de la seconde culasse 11 B, les moyens de détection détectent cette position. L'unité de commande de la bobine de commande 20 peut alors l'alimenter. Le flux magnétique généré par la bobine de commande 20 circule dans le circuit magnétique à travers le premier et le second entrefer E1, E2. Le flux magnétique crée deux forces F1, F2 de déplacement s'appliquant sur les gâchettes pour les attirer vers les secondes extrémités des branches des culasses 11 A, 11 B. Autrement dit, les force de déplacements F1, F2 tendent à déplacer les gâchettes de la position d'ouverture vers la position de fermeture.

Selon un mode développement de l'invention, les seconds moyens de retenu génèrent une force de retenu FR2 d'intensité inférieure à une force de retenu FR1 générée par les premiers moyens de retenu.

La première force de retenu FR1 des seconds moyens de retenu, compte tenu de la taille du second entrefer E1 et une force élastique générée par le premier moyen élastique de rappel 12 de la première gâchette 13A, est trop importante par rapport à la première force magnétique de déplacement F1 générée par le flux magnétique circulant dans le circuit magnétique et les deux entrefers E1, E2.

La seconde force de retenu FR2 des seconds moyens de retenu, compte tenu de la taille du second entrefer E2 et une force élastique générée par le second moyen élastique de rappel 12 de la seconde gâchette 13B, est inférieure à la force magnétique de déplacement F2 générée par le flux magnétique circulant dans le circuit magnétique et les deux entrefer E1, E2. Ainsi la seconde gâchette 13B est entrainée en déplacement pour venir en contact avec les secondes extrémités des branches de la seconde culasse 11B. Le déplacement de la seconde gâchette 13B autorise le déverrouillage de la trappe mobile d'accès 21 de la borne passive de chargement B du véhicule électrique.

La première force de retenu FR1 devient alors inférieure à la force magnétique de déplacement F1 générée par le flux magnétique circulant dans le circuit magnétique et un seul entrefer E1. La première gâchette 13A est entrainée en déplacement pour venir en contact avec les secondes extrémités des branches de la première culasse 11 A. Le déplacement de la première gâchette 13A autorise le déverrouillage de la trappe mobile d'accès 21 de la borne active de chargement A du robot mobile.

Selon le mode de développement de l'invention on observe une ouverture décalée des trappes de verrouillages des deux bornes électriques passive et active B, A. La connexion des moyens électrique des deux bornes peut alors être effective.

Lorsque les deux entrefers E1, E2 sont annulés, la force magnétique résultante liée à la circulation du flux magnétique dans le circuit magnétique sans entrefer, permet d'assurer un verrouillage magnétique entre les deux bornes le temps de la charge complète du véhicule électrique connectées au robot.

## Revendications

1. Dispositif d'actionnement à commande électromagnétique comportant des moyens de verrouillage sécurisés, lesdits moyens ayant un circuit magnétique composé d'une première (100) et d'une deuxième partie (200) et d'une bobine de commande (20) alimentée pour générer un flux magnétique de commande et actionner en mouvement la deuxième partie (200) entre une position d'ouverture et une position de fermeture du circuit magnétique, le dispositif **caractérisé en ce que :**
- la première partie (100) du circuit magnétique comporte une première et une seconde culasse (11A, 11B) déplaçables l'une par rapport à l'autre entre une position initiale et une position finale autorisant la circulation du flux magnétique de commande ;
- la deuxième partie (200) du circuit magnétique comporte une première gâchette (13A) magnétique mobile actionnable en déplacement par rapport à la première culasse (11A) entre la position d'ouverture et la position de fermeture du circuit magnétique lorsque les deux culasses (11A, 11B) sont dans la position finale.

2. Dispositif d'actionnement selon la revendication 1, **caractérisé en ce que** la deuxième partie (200) du circuit magnétique comporte une seconde gâchette (13B) magnétique mobile actionnée en déplacement par rapport à la seconde culasse (11 B) entre la position d'ouverture et la position de fermeture du circuit magnétique lorsque les deux culasses (11 A, 11B) sont dans la position finale.

3. Dispositif d'actionnement selon les revendications 1 ou 2, **caractérisé en ce que** la bobine de commande (20) est apte à générer un flux magnétique de commande dans le circuit magnétique pour déplacer au moins une gâchette (13A, 13B) magnétique mobile entre la position d'ouverture et la position de fermeture du circuit magnétique.

4. Dispositif d'actionnement selon l'une des revendications 1 à 3, **caractérisé en ce que** la première et la seconde culasses (11A, 11 B) sont destinées à collaborer directement ou indirectement l'une avec l'autre pour placer la première partie (100) du circuit magnétique dans la position finale.

5. Dispositif d'actionnement selon la revendication 4, **caractérisé en ce que** la première culasse (11A) comporte la bobine de commande (20), la première culasse (11A) étant apte à collaborer directement avec la seconde culasse (11B) pour placer la première partie (100) du circuit magnétique dans la position finale.

6. Dispositif d'actionnement selon la revendication 4, **caractérisé en ce que** le circuit magnétique comporte une pièce d'accouplement magnétique s'interposant entre la première culasse (11 A) collaborant indirectement avec la seconde culasse (11B) pour placer la première partie (100) du circuit magnétique dans la position finale.

7. Dispositif d'actionnement selon la revendication 6, **caractérisé en ce que** la pièce d'accouplement magnétique comporte la bobine de commande (20).

8. Dispositif d'actionnement selon l'une quelconque des revendications précédentes, **caractérisé en ce que** la deuxième partie (200) du circuit magnétique comporte des premiers moyens de retenu de la première gâchette (13A) mobile dans la position d'ouverture, lesdits premiers moyens s'opposant à une action du flux magnétique de commande de la bobine de commande (20).

9. Dispositif d'actionnement selon la revendication 8, **caractérisé en ce que** les moyens de retenu génèrent une force de retenu d'intensité inférieure à une force magnétique générée par la bobine de commande, ladite force de retenu étant directement proportionnelle à :
- une force élastique générée par un premier moyen élastique (12) de rappel de la première gâchette (13A) magnétique mobile dans la première position d'ouverture ;
- un premier entrefer (E1) séparant la première gâchette magnétique (13A) mobile de la première culasse (11A) dans la position d'ouverture.

10. Dispositif d'actionnement selon la revendication 9, **caractérisé en ce que** la deuxième partie (200) du circuit magnétique comporte des seconds moyens de retenu d'une seconde gâchette (13B) mobile dans la position d'ouverture, lesdits seconds moyens s'opposant à une action du flux magnétique de commande de la bobine de commande en générant une seconde force de retenu d'intensité inférieure à une force magnétique générée par la bobine de commande, ladite seconde force étant directement proportionnelle à :
- une force élastique générée par un second moyen élastique (12) de rappel de la seconde gâchette (13B) magnétique mobile dans la première position d'ouverture ;
- un second entrefer (E2) séparant la seconde gâchette (13B) magnétique mobile de la seconde culasse (11B) dans la position d'ouverture.

11. Dispositif d'actionnement selon la revendication 10, **caractérisé en ce que** la seconde force d'ouverture des seconds moyens de retenu de la seconde gâchette magnétique (11B) mobile est d'intensité supérieure à la première force d'ouverture des premiers moyens de retenu de la première gâchette (11 A) magnétique mobile.

12. Dispositif d'actionnement selon l'une quelconque des revendications précédentes, **caractérisé en ce que** chaque culasse (11A, 11B) comporte deux branches reliées par une gâchette (13A, 13B) magnétique mobile dans la position de fermeture du circuit magnétique.

13. Dispositif d'actionnement selon l'une quelconque des revendications 2 à 12, **caractérisé en ce que** chaque gâchette (13A, 13B) est reliable à une trappe mobile (21) d'accès à des moyens de connexion électrique, le déplacement de la gâchette entraînant le déverrouillage de ladite trappe d'accès.

14. Dispositif d'actionnement selon l'une quelconque des revendications précédentes, **caractérisé en ce qu'**il comporte des moyens de détection de la position finale des culasses (11A, 11B), lesdits moyens de détection étant reliés aux moyens de commande de la bobine de commande (20) pour l'alimenter lorsque les deux culasses (11A, 11B) sont dans la position finale.

15. Dispositif de rechargement de véhicule électrique comportant :
- une borne passive (B) de chargement pour véhicule électrique comportant des premiers moyens de connexion électrique destinés à être connectés à des seconds moyens de connexion d'une borne active (A) de chargement, et
- une borne active (A) de chargement pour véhicule électrique comportant des seconds moyens de connexion électrique destinés à être connectés à des premiers moyens de connexion de ladite borne passive (B) de chargement, **caractérisé en ce que :**
- le dispositif de rechargement comporte le dispositif d'actionnement selon la revendication 2 ou l'une des revendications 3-14 si dépendant de la revendication 2,
- les premiers moyens de connexion électrique de ladite borne passive sont disposés dans un volume fermé par une première trappe mobile d'accès (21) reliée à la seconde gâchette mobile (13B) de la deuxième partie (200) du circuit magnétique pour être verrouillée par le dispositif d'actionnement, et
- les seconds moyens de connexion électrique de ladite borne active sont disposés dans un volume fermé par une seconde trappe mobile d'accès reliée à la première gâchette mobile (13A) de la deuxième partie (200) du circuit magnétique pour être verrouillée par le dispositif d'actionnement.

16. Dispositif de rechargement de véhicule électrique selon la revendication 15 **caractérisé en ce que** la borne active de chargement comporte des moyens de détection de la position finale des première et seconde culasses (11A, 11B).

17. Dispositif de rechargement de véhicule électrique selon l'une des revendications 15 ou 16 **caractérisé en ce que** la borne passive (B) est intégrable dans un véhicule électrique et **en ce que** la borne active (A) est intégrable dans un robot mobile relié à une source électrique et destiné à venir en contact avec la borne passive (B) de manière à ce que la seconde culasse (11B) et la première culasse (11A) soient dans la position finale.

## Patentansprüche

1. Betätigungsvorrichtung mit elektromagnetischer Steuerung, die gesicherte Verriegelungseinrichtungen aufweist, wobei die Einrichtungen einen Magnetkreis haben, der aus einem ersten (100) und einem zweiten Teil (200) und einer Steuerspule (20) besteht, die gespeist wird, um einen Steuermagnetfluss zu erzeugen und den zweiten Teil (200) zwischen einer Öffnungsstellung und einer Schließstellung des Magnetkreises in Bewegung zu versetzen, wobei die Vorrichtung **dadurch gekennzeichnet ist, dass**:
- der erste Teil (100) des Magnetkreises ein erstes und ein zweites Joch (11A, 11 B) aufweist, die zueinander zwischen einer Anfangsstellung und einer Endstellung verschiebbar sind, die die Zirkulation des Steuermagnetflusses erlaubt;
- der zweite Teil (200) des Magnetkreises einen ersten beweglichen magnetischen Steueranschluss (13A) aufweist, der bezüglich des ersten Jochs (11A) zwischen der Öffnungsstellung und der Schließstellung des Magnetkreises verschoben werden kann, wenn die zwei Jochs (11 A, 11 B) in der Endstellung sind.

2. Betätigungsvorrichtung nach Anspruch 1, **dadurch gekennzeichnet, dass** der zweite Teil (200) des Magnetkreises einen zweiten beweglichen magnetischen Steueranschluss (13B) aufweist, der bezüglich des zweiten Jochs (11 B) zwischen der Öffnungsstellung und der Schließstellung des Magnetkreises verschoben wird, wenn die zwei Jochs (11 A, 11 B) in der Endstellung sind.

3. Betätigungsvorrichtung nach den Ansprüchen 1 oder 2, **dadurch gekennzeichnet, dass** die Steuerspule (20) einen Steuermagnetfluss im Magnetkreis erzeugen kann, um mindestens einen beweglichen magnetischen Steueranschluss (13A, 13B) zwischen der Öffnungsstellung und der Schließstellung des Magnetkreises zu verschieben.

4. Betätigungsvorrichtung nach einem der Ansprüche 1 bis 3, **dadurch gekennzeichnet, dass** das erste und das zweite Joch (11A, 11 B) dazu bestimmt sind, direkt oder indirekt zusammenzuwirken, um den ersten Teil (100) des Magnetkreises in der Endstellung anzuordnen.

5. Betätigungsvorrichtung nach Anspruch 4, **dadurch gekennzeichnet, dass** das erste Joch (11A) die Steuerspule (20) aufweist, wobei das erste Joch (11A) direkt mit dem zweiten Joch (11 B) zusammenwirken kann, um den ersten Teil (100) des Magnetkreises in der Endstellung anzuordnen.

6. Betätigungsvorrichtung nach Anspruch 4, **dadurch gekennzeichnet, dass** der Magnetkreis ein Magnetkupplungsbauteil aufweist, das sich zwischen das erste Joch (11A) einfügt, das indirekt mit dem zweiten Joch (11 B) zusammenwirkt, um den ersten Teil (100) des Magnetkreises in der Endstellung anzuordnen.

7. Betätigungsvorrichtung nach Anspruch 6, **dadurch gekennzeichnet, dass** das Magnetkupplungsbauteil die Steuerspule (20) aufweist.

8. Betätigungsvorrichtung nach einem der vorhergehenden Ansprüche, **dadurch gekennzeichnet, dass** der zweite Teil (200) des Magnetkreises erste Halteeinrichtungen des ersten beweglichen Steueranschlusses (13A) in der Öffnungsstellung aufweist, wobei die ersten Einrichtungen einer Aktion des Steuermagnetflusses der Steuerspule (20) entgegenwirken.

9. Betätigungsvorrichtung nach Anspruch 8, **dadurch gekennzeichnet, dass** die Halteeinrichtungen eine Haltekraft erzeugen, deren Intensität geringer ist als eine von der Steuerspule erzeugte Magnetkraft, wobei die Haltekraft direkt proportional ist zu:
- einer von einer ersten elastischen Rückstelleinrichtung (12) des ersten beweglichen magnetischen Steueranschlusses (13A) in die erste Öffnungsstellung erzeugten elastischen Kraft;
- einem ersten Luftspalt (E1), der den ersten beweglichen magnetischen Steueranschluss (13A) vom ersten Joch (11A) in der Öffnungsstellung trennt.

10. Betätigungsvorrichtung nach Anspruch 9, **dadurch gekennzeichnet, dass** der zweite Teil (200) des Magnetkreises zweite Halteeinrichtungen eines zweiten beweglichen Steueranschlusses (13B) in der Öffnungsstellung aufweist, wobei die zweiten Einrichtungen einer Aktion des Steuermagnetflusses der Steuerspule entgegenwirken, indem sie eine zweite Haltekraft einer geringeren Intensität als eine von der Steuerspule erzeugte Magnetkraft erzeugen, wobei die zweite Kraft direkt proportional ist zu:
- einer von einer zweiten elastischen Rückstelleinrichtung (12) des zweiten beweglichen magnetischen Steueranschlusses (13B) in die erste Öffnungsstellung erzeugten elastischen Kraft;
- einem zweiten Luftspalt (E2), der den zweiten beweglichen magnetischen Steueranschluss (13B) vom zweiten Joch (11 B) in der Öffnungsstellung trennt.

11. Betätigungsvorrichtung nach Anspruch 10, **dadurch gekennzeichnet, dass** die zweite Öffnungskraft der zweiten Halteeinrichtungen des zweiten beweglichen magnetischen Steueranschlusses (11 B) eine höhere Intensität hat als die erste Öffnungskraft der ersten Halteeinrichtungen des ersten beweglichen magnetischen Steueranschlusses (11A).

12. Betätigungsvorrichtung nach einem der vorhergehenden Ansprüche, **dadurch gekennzeichnet, dass** jedes Joch (11A, 11 B) zwei Schenkel aufweist, die durch einen beweglichen magnetischen Steueranschluss (13A, 13B) in der Schließstellung des Magnetkreises verbunden werden.

13. Betätigungsvorrichtung nach einem der Ansprüche 2 bis 12, **dadurch gekennzeichnet, dass** jeder Steueranschluss (13A, 13B) mit einer beweglichen Zugangsklappe (21) zu elektrischen Anschlusseinrichtungen verbindbar ist, wobei die Verschiebung des Steueranschlusses die Entriegelung der Zugangsklappe nach sich zieht.

14. Betätigungsvorrichtung nach einem der vorhergehenden Ansprüche, **dadurch gekennzeichnet, dass** sie Erfassungseinrichtungen der Endstellung der Jochs (11A, 11 B) aufweist, wobei die Erfassungseinrichtungen mit den Steuereinrichtungen der Steuerspule (20) verbunden sind, um sie zu speisen, wenn die zwei Jochs (11A, 11 B) in der Endstellung sind.

15. Elektrofahrzeug-Wiederaufladevorrichtung, die aufweist:
- eine passive Elektrofahrzeug-Ladestation (B), die erste elektrische Anschlusseinrichtungen aufweist, die dazu bestimmt sind, an zweite Anschlusseinrichtungen einer aktiven Ladestation (A) angeschlossen zu werden, und
- eine aktive Elektrofahrzeug-Ladestation (A), die zweite elektrische Anschlusseinrichtungen aufweist, die dazu bestimmt sind, an erste Anschlusseinrichtungen der passiven Ladestation (B) angeschlossen zu werden, **dadurch gekennzeichnet, dass**:
- die Wiederaufladevorrichtung die Betätigungsvorrichtung nach Anspruch 2 oder einem der Ansprüche 3-14 aufweist, wenn sie von Anspruch 2 abhängen,
- die ersten elektrischen Anschlusseinrichtungen der passiven Station in einem von einer mit dem zweiten beweglichen Steueranschluss (13B) des zweiten Teils (200) des Magnetkreises verbundenen ersten beweglichen Zugangsklappe (21) verschlossenen Volumen angeordnet sind, um von der Betätigungsvorrichtung verriegelt zu werden, und
- die zweiten elektrischen Anschlusseinrichtungen der aktiven Station in einem von einer zweiten mit dem ersten beweglichen Steueranschluss (13A) des zweiten Teils (200) des Magnetkreises verbundenen zweiten beweglichen Zugangsklappe verschlossenen Volumen angeordnet sind, um von der Betätigungsvorrichtung verriegelt zu werden.

16. Elektrofahrzeug-Wiederaufladevorrichtung nach Anspruch 15, **dadurch gekennzeichnet, dass** die aktive Ladestation Einrichtungen zur Erfassung der Endstellung des ersten und des zweiten Jochs (11A, 11 B) aufweist.

17. Elektrofahrzeug-Wiederaufladevorrichtung nach einem der Ansprüche 15 oder 16, **dadurch gekennzeichnet, dass** die passive Station (B) in ein Elektrofahrzeug einbaubar ist, und dass die aktive Station (A) in einen beweglichen Roboter einbaubar ist, der mit einer Stromquelle verbunden und dazu bestimmt ist, mit der passiven Station (B) in Kontakt zu kommen, damit das zweite Joch (11 B) und das erste Joch (11A) in der Endstellung sind.

## Claims

1. Actuating device with electromagnetic control comprising secure locking means, said means having a magnetic circuit composed of a first part (100) and a second part (200) and a control coil (20) powered to generate a controlling magnetic flux and actuate the second part (200) to move between a position of opening and a positon of closure of the magnetic circuit, the device
**characterized in that**:
- the first part (100) of the magnetic circuit comprises a first and a second yoke (11 A, 11 B) that can be displaced relative to one another between an initial position and a final position allowing the circulation of the controlling magnetic flux;
- the second part (200) of the magnetic circuit comprises a first mobile magnetic trigger (13A) that can be actuated in displacement relative to the first yoke (11 A) between the position of opening and the position of closure of the magnetic circuit when the two yokes (11 A, 11 B) are in the final position.

2. Actuation device according to Claim **1, characterized in that** the second part (200) of the magnetic circuit comprises a second mobile magnetic trigger (13B) actuated in displacement relative to the second yoke (11 B) between the position of opening and the position of closure of the magnetic circuit when the two yokes (11 A, 11 B) are in the final position.

3. Actuation device according to Claims 1 or 2, **characterized in that** the control coil (20) is capable of generating a controlling magnetic flux in the magnetic circuit to displace at least one mobile magnetic trigger (13A, 13B) between the position of opening and the position of closure of the magnetic circuit.

4. Actuation device according to one of Claims 1 to 3, **characterized in that** the first and the second yokes (11 A, 11 B) are intended to collaborate directly or indirectly with one another to place the first part (100) of the magnetic circuit in the final position.

5. Actuation device according to Claim 4, **characterized in that** the first yoke (11 A) comprises the control coil (20), the first yoke (11 A) being capable of collaborating directly with the second yoke (11 B) to place the first part (100) of the magnetic circuit in the final position.

6. Actuation device according to Claim 4, **characterized in that** the magnetic circuit comprises a magnetic coupling piece interposed between the first yoke (11 A) collaborating indirectly with the second yoke (11 B) to place the first part (100) of the magnetic circuit in the final position.

7. Actuation device according to Claim 6, **characterized in that** the magnetic coupling piece comprises the control coil (20).

8. Actuation device according to any one of the preceding claims, **characterized in that** the second part (200) of the magnetic circuit comprises first means for retaining the first mobile trigger (13A) in the position of opening, said first means opposing an action of the controlling magnetic flux from the control coil (20).

9. Actuation device according to Claim 8, **characterized in that** the retaining means generate a retaining force with an intensity lower than a magnetic force generated by the control coil, said retaining force being directly proportional to:
- an elastic force generated by a first elastic means (12) for returning the first mobile magnetic trigger (13A) to the first position of opening;
- a first air gap (E1) separating the first mobile magnetic trigger (13A) from the first yoke (11A) in the position of opening.

10. Actuation device according to Claim 9, **characterized in that** the second part (200) of the magnetic circuit comprises second means for retaining a second mobile trigger (13B) in the position of opening, said second means opposing an action of the controlling magnetic flux of the control coil by generating a second retaining force with an intensity lower than a magnetic force generated by the control coil, said second force being directly proportional to:
- an elastic force generated by a second elastic means (12) for returning the second mobile magnetic trigger (13B) to the first position of opening;
- a second air gap (E2) separating the second mobile magnetic trigger (13B) from the second yoke (11 B) in the position of opening.

11. Actuation device according to Claim 10, **characterized in that** the second opening force of the second retaining means of the second mobile magnetic trigger (11 B) has an intensity greater than the first opening force of the first retaining means of the first mobile magnetic trigger (11 A).

12. Actuation device according to any one of the preceding claims, **characterized in that** each yoke (11 A, 11 B) comprises two branches linked by a mobile magnetic trigger (13A, 13B) in the position of closure of the magnetic circuit.

13. Actuation device according to any one of Claims 2 to 12, **characterized in that** each trigger (13A, 13B) can be linked to a mobile hatch (21) for accessing electrical connection means, the displacement of the trigger causing said access hatch to be unlocked.

14. Actuation device according to any one of the preceding claims, **characterized in that** it comprises means for detecting the final position of the yokes (11 A, 11 B), said detection means being linked to the control means of the control coil (20) to power it when the two yokes (11 A, 11 B) are in the final position.

15. Electric vehicle recharging device comprising:
- a passive charging terminal (B) for an electric vehicle comprising first electrical connection means intended to be connected to second connection means of an active charging terminal (A), and
- an active charging terminal (A) for an electric vehicle comprising second electrical connection means intended to be connected to first connection means of said passive charging terminal (B), **characterized in that**:
- the recharging device comprises the actuation device according to Claim 2 or one of Claims 3-14 if dependent on Claim 2,
- the first electrical connection means of said passive terminal are arranged in a volume closed by a first mobile access hatch (21) linked to the second mobile trigger (13B) of the second part (200) of the magnetic circuit to be locked by the actuation device, and
- the second electrical connection means of said active terminal are arranged in a volume closed by a second mobile access hatch linked to the first mobile trigger (13A) of the second part (200) of the magnetic circuit to be locked by the actuation device.

16. Electric vehicle recharging device according to Claim 15, **characterized in that** the active charging terminal comprises means for detecting the final position of the first and second yokes (11 A, 11 B).

17. Electric vehicle recharging device according to one of Claims 15 or 16, **characterized in that** the passive terminal (B) can be incorporated in an electric vehicle and **in that** the active terminal (A) can be incorporated in a mobile robot linked to an electrical source and intended to come into contact with the passive terminal (B) in such a way that the second yoke (11 B) and the first yoke (11 A) are in the final position.
